# EUROPEAN PATENT SPECIFICATION

(11) **EP 4 384 706 B1**
(45) Date of publication and mention of the grant of the patent: **15.04.2026**
(21) Application number: 22732394.6
(22) Date of filing: 30.05.2022
(51) Int. Cl.: F03D 80/00

(54) **IMPROVEMENTS RELATING TO WIND TURBINE NACELLE COVERS**
VERBESSERUNGEN IM ZUSAMMENHANG MIT WINDTURBINENGONDELABDECKUNGEN
AMÉLIORATIONS SE RAPPORTANT À DES COUVERCLES DE NACELLE D'ÉOLIENNE

(30) Priority: 10.08.2021 DK PA202170402
(43) Date of publication of application: 19.06.2024
(73) Proprietor: VESTAS WIND SYSTEMS A/S, 8200 Aarhus N (DK)
(72) Inventor: THERKILDSEN, Claus Hald, 8200 Aarhus N (DK); AMUNDSEN, John, 8200 Aarhus N (DK); COSTA VILACA, Bruno Manuel, 8200 Aarhus N (DK); SLOTEMAKER, Jacob-Jan, 8200 Aarhus N (DK)
(74) Representative: Vestas Patents Department
(86) International application number: PCT/DK2022/050114
(87) International publication number: WO 2023/016614

(56) References cited:
- EP-A1- 2 469 007
- EP-A1- 2 759 701
- WO-A1-2004/003381
- GB-A- 349 172
- KR-B1- 101 638 012

## Description

### TECHNICAL FIELD

The invention relates to covers for nacelle assemblies of wind turbines, and in particular to cover arrangements that are reconfigurable between open and closed positions.

### BACKGROUND

The nacelle of a wind turbine houses a number of functional components, including a gearbox and a generator. During the lifetime of the wind turbine the components housed within the nacelle may need to be accessed in order to carry out servicing or repair, and/or to replace damaged components or parts of components. Thus, it is important that the components within the nacelle are readily accessible to maintenance personnel when required, so as to reduce the time that the wind turbine must be out of operation for maintenance or repair operations.

In conventional arrangements, roof panels of the nacelle must be removed to access the interior of the nacelle and the components contained within. This requires the use of a crane to remove and replace the roof panels before and after accessing the interior of the nacelle. In some known configurations, hatch covers are configured to swing outwardly on an associated hinge mechanism in order to uncover an opening in the nacelle. Particularly in offshore environments where wind speeds tend to be higher, the upright orientation of hatch covers can catch the wind which can stress the hinge mechanism. Construction of such systems generally require over engineering to cope with wind gusts, which increases the size of such systems and increases their weight. A prior art example can be found in EP2759701A1.

The present invention has been devised against this background.

### SUMMARY OF THE INVENTION

In one aspect, the invention provides a nacelle for a wind turbine. The nacelle comprises: a nacelle housing for housing components of a wind turbine, the nacelle housing comprising a nacelle opening; and a nacelle cover arranged over the nacelle opening. The nacelle cover is movable between a closed position in which the nacelle opening is fully covered or blocked by the nacelle cover, and an open position in which the nacelle opening is at least partially uncovered or unblocked to allow access to components housed within the nacelle housing. The nacelle cover comprises multiple cover panels arranged telescopically with respect to one another, wherein at least one cover panel is movable with respect to another cover panel along a longitudinal axis of the nacelle to move the nacelle cover between its open and closed positions.

The invention allows a user to access components within the nacelle simply by sliding one or more of the cover panels along the longitudinal axis of the nacelle to unblock at least a portion of the nacelle opening. By virtue of the telescopic cover panel arrangement, the user need only unblock the portion of the nacelle opening that is required for access, and the rest can remain covered to protect the components within. This is in contrast to hatch covers that swing outwardly, for example, which do not allow for the same level of control over how much of the nacelle opening is accessible at a given time.

Furthermore, the telescopic arrangement of the cover panels also reduces the likelihood of the nacelle cover causing damage to other components of the nacelle, or being damaged itself, during opening or closing in high winds. In arrangements in which a hatch cover swings outwardly about a hinge, high winds can have a significant impact on how easy it is to open / close the hatch and on how well controlled this opening / closing operation is. For example, depending on the wind direction, more force may need to be applied to open or close the hatch cover, making these operations more difficult to perform. Furthermore, the hatch cover may catch the wind during opening or closing, causing unexpected and uncontrolled movement and potentially resulting in damage to the hatch cover and/or to other components of the nacelle. Such uncontrolled movement may also result in injury to a user in the vicinity. The telescopic cover arrangement of the invention negates these issues.

The nacelle cover comprises a fixed cover panel positioned at an end of the opening. When the nacelle cover is in a fully open position, the at least one movable cover panel is nested within the fixed cover panel. This provides some protection for the movable cover panels when the nacelle cover is fully open, and stores the movable cover panels out of the way of an operator and/or any equipment that is in use in the vicinity of the nacelle.

Each movable cover panel may comprise a rolling arrangement that permits movement of the movable cover panel with respect to the nacelle. The rolling arrangement may comprise at least two wheels. A first wheel may be rotatably mounted to a first side wall of the movable cover panel, and a second wheel may be rotatably mounted to a second, opposing, side wall of the movable cover panel.

The nacelle may comprise at least two rails. The first wheel may engage and be rotatable along a first rail that extends longitudinally along a first side edge of the nacelle opening. The second wheel may engage and be rotatable along a second rail that extends longitudinally along a second side edge of the nacelle opening.

Each rail may extend outwardly from the nacelle housing to define a generally T-shaped cross section. Each wheel may comprise two circumferential flanges arranged at either side of its corresponding rail so as to maintain positioning of the wheel on the rail in use. This advantageously guards against wheel misalignment, and potentially removal of the wheel from its corresponding rail, so as to ensure smooth and reliable operation of the associated cover panel.

Each wheel may be mounted to the movable cover panel via a bracket comprising an upper portion and a lower portion. The upper portion may be attached to the side wall of the movable cover panel, and follow the curvature of the side wall of the movable cover panel to which it is attached. The lower portion may extend downwardly from the upper portion in a generally vertical direction or plane. The lower portion may rotatably support the wheel for rotation about an axis that extends perpendicularly to the generally vertical plane. In this way, the bent or bended brackets support the wheels for proper engagement with the upwardly extending rails in embodiments in which the movable cover panels have sloped side walls.

Each rail may extend outwardly from the nacelle housing and define a generally U-shaped cross section. In this way, the wheel may be received in and sit within an opening of the rail in use, thereby reducing the likelihood of the wheel disengaging from the rail.

The nacelle may include one or more wind hooks to prevent wheels of the rolling arrangement from being lifted off their associated rails, for example during windy weather. These wind hooks may comprise one or more L-shaped brackets that are mounted on the fixed axle of the wheel, and that extend beneath at least a portion of the associated rail to prevent disengagement.

A motor may be configured to drive opening and closing of the nacelle cover. Alternatively or additionally, the nacelle cover may be opened and/or closed manually by an operator.

The motor may be configured to drive movement of each movable cover panel independently from one another. In this way a user can open just a specific portion of the nacelle cover, allowing the interior of the nacelle to be accessed without exposing the entire nacelle opening. Thus, components within the nacelle may be better protected during an access operation.

The nacelle may comprise a control system configured to carry out instructions received by a control panel of the nacelle. The instructions may include a request to open the nacelle cover or a request to close the nacelle cover. The instructions may include a request to lock the nacelle cover.

When the nacelle cover is locked, the control system may prevent activation of the motor to prevent movement of the nacelle cover. The control system may be configured to lock the nacelle cover only when the nacelle cover is in the fully closed position. In this way, the system may be configured to prevent the nacelle cover being locked in an open or partially open position, in which components housed in the nacelle are exposed and more likely to be damaged.

The nacelle may comprise a limit switch configured to limit further movement of the nacelle cover when the nacelle cover has reached the fully closed or fully open position. Alternatively or additionally the nacelle may comprise one or more end stops for limiting movement of the movable cover panels, for example to prevent movement of the nacelle cover past the fully open and/or fully closed positions.

### BRIEF DESCRIPTION OF THE DRAWINGS

The invention will now be described by way of example with reference to the accompanying drawings, in which:
Figure 1 is a perspective view of a nacelle in accordance with an embodiment of the invention, showing a nacelle cover in a closed position to block access to the interior of the nacelle;
Figure 2 is a perspective view of the nacelle cover of Figure 1 in isolation;
Figure 3 is a schematic front view of two movable cover panels of the nacelle cover of Figure 1;
Figure 4 is a close-up schematic view of a portion of one of the movable cover panels of Figure 3, illustrating the arrangement between a wheel and a rail of the nacelle;
Figure 5 is a schematic side view of the nacelle cover of a nacelle in accordance with another embodiment of the invention;
Figure 6a illustrates a wheel and rail arrangement of a nacelle in accordance with another embodiment of the invention;
Figure 6b illustrates a rail of a nacelle in accordance with another embodiment of the invention;
Figure 7a illustrates a portion of a nacelle in accordance with another embodiment of the invention, and shows the arrangement between a wheel and its associated movable cover panel;
Figure 7b is a cross-sectional view of the wheel of Figure 7a engaged with an associated rail;
Figure 8 is a perspective view of multiple wheels of the nacelle of Figure 7a engaged with their respective rails;
Figure 9 is a front view of the nacelle cover of Figure 1 showing sealing members of the arrangement;
Figure 10a is a close-up view of a sealing member of Figure 9; and
Figure 10b is a perspective view of a portion of the sealing member of Figure 10a in isolation.

### DETAILED DESCRIPTION

The following detailed description refers to the accompanying drawings that show, by way of illustration, specific details and embodiments in which the invention may be practiced. These embodiments are described in sufficient detail to enable those of ordinary skill in the art to practice the invention. Other embodiments may be utilised, and structural changes may be made without departing from the scope of the invention as defined in the appended claims.

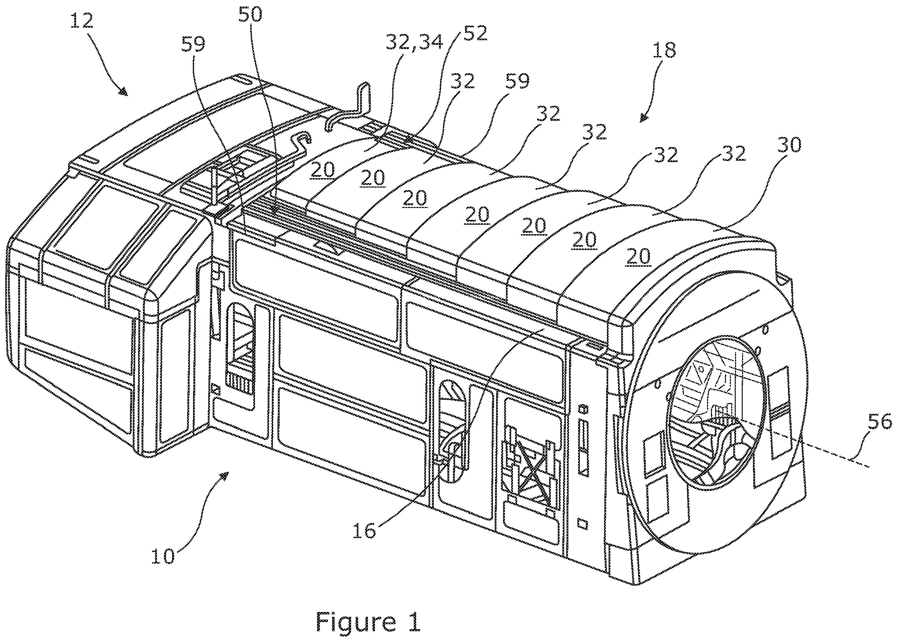

Figure 1 shows a wind turbine nacelle 10 in accordance with an embodiment of the invention.

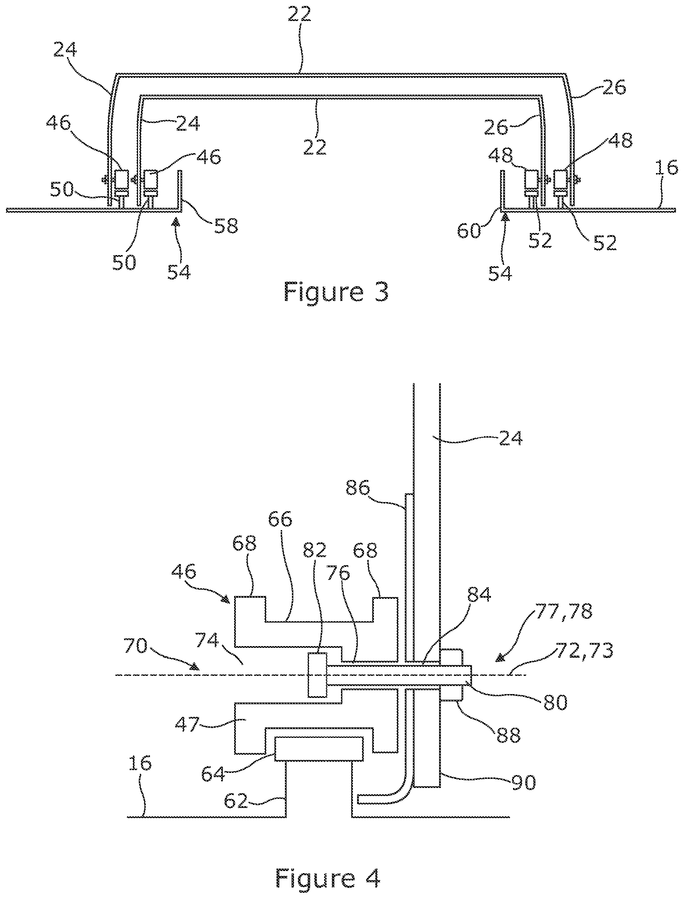

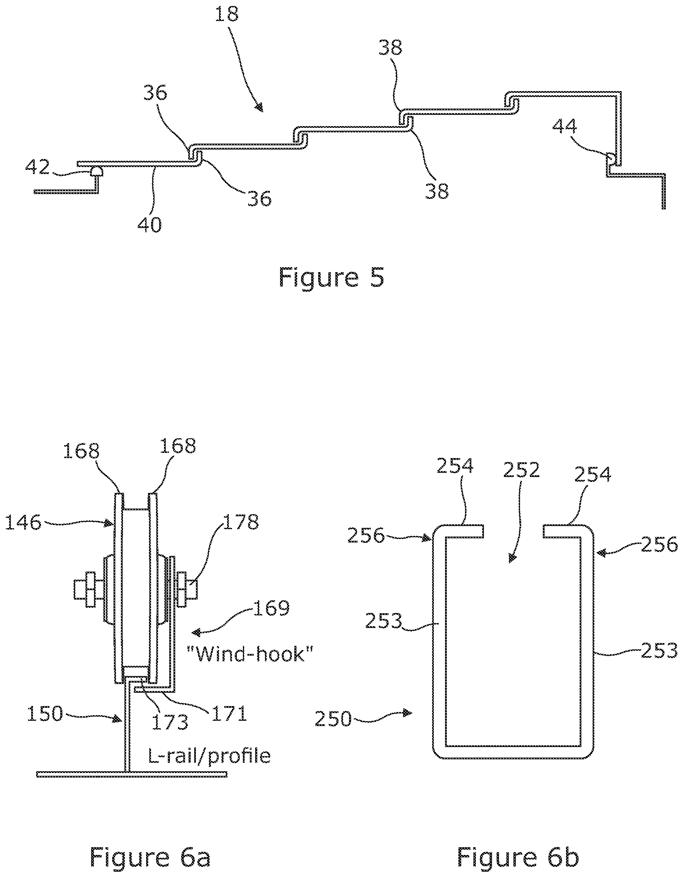

The nacelle 10 comprises a nacelle housing 12 that houses a number of functional components (not shown) in use. The nacelle housing 12 includes a nacelle opening 14 (not shown in Figure 1, but represented in Figures 3 and 5) provided in an upper surface 16 of the nacelle housing 12, through which components of the nacelle 10 can be accessed when required, for example for maintenance and/or repair.

The nacelle 10 further comprises a nacelle cover 18. The nacelle cover 18 is mounted to the nacelle housing 12, and is arranged over the nacelle opening 14 so as to form a cover for the nacelle opening 14 and provide environmental protection for the components within.

The nacelle cover 18 is movable between a closed position and an open position. In the closed position, illustrated in Figure 1, the nacelle cover 18 is arranged to fully cover or close the nacelle opening 14. In the open position, the nacelle cover 18 is arranged such that the nacelle opening 14 is at least partially uncovered, and internal components of the nacelle 10 are accessible through the nacelle opening 14. An electric motor (not shown) drives the nacelle cover 18 between the open position and the closed position.

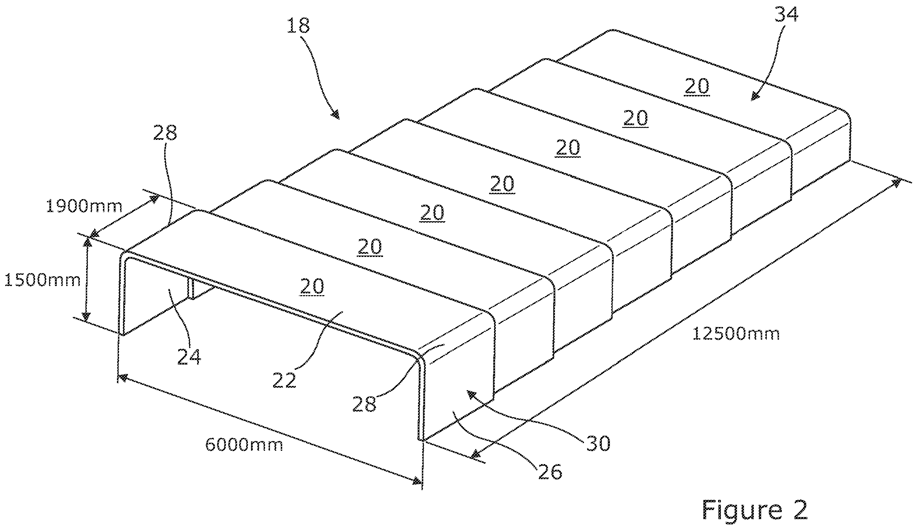

As will be appreciated from Figures 1 and 2 in particular, the nacelle cover 18 comprises a plurality of cover panels 20 that are arranged telescopically with respect to one another. This telescopic cover arrangement is advantageous as it allows for the interior of the nacelle housing 12 to be accessed quickly and easily, simply by sliding cover panels of the nacelle cover 18 to expose a portion of the nacelle opening 14. Advantageously, none of the cover panels 20 need be removed to expose the nacelle opening 14 and access the interior of the nacelle housing 12. As such, hoisting means are not required, as is the case in conventional arrangements.

Each cover panel 20 has an inverted U-shaped cross section defined by an upper wall 22 and first and second side walls, 24 and 26 respectively, that extend downwardly from opposing side edges 28 of the upper wall 22. It should be noted that whilst in this embodiment the nacelle cover 18 includes seven cover panels 20, in other embodiments this number may vary.

In this embodiment, an outermost cover panel 30 positioned at a first end (not shown) of the nacelle opening 14 is fixed with respect to the nacelle housing 12, and the remaining cover panels 32 are movable with respect to the nacelle housing 12 to reconfigure the nacelle cover 18 between its open and closed positions.

When the nacelle cover 18 is in a fully open position in which as much of the nacelle opening 14 is exposed as possible, the movable cover panels 32 are nested within the fixed outermost cover panel 30. It will be understood and can be appreciated from Figure 1 that in order the provide this telescopic cover arrangement, the U-shaped cross section of the outermost cover panel 30 has a greater height and width than the U-shaped cross sections of the movable cover panels 32, with these dimensions decreasing progressively such that an innermost cover panel 34 defines the smallest U-shaped cross section.

Referring to Figure 5, which illustrates a side view of an embodiment of the invention that differs from the embodiment of Figure 1 only in the number of cover panels 20 included in the arrangement, each cover panel 20 comprises at least one limiting wall 36 that extends generally perpendicularly from an end edge 38 of the upper wall 22.

As will be appreciated from Figure 5, limiting walls 36 of neighbouring cover panels 20 engage with one another to limit movement of the respective cover panels 20 and prevent neighbouring cover panels 20 from disengaging from one another. As will also be appreciated from Figure 5, the innermost cover panel 34 includes just a single limiting wall 36 so as to allow for an inner surface 40 of its upper wall 22 to engage with a first sealing member 42 provided on the nacelle housing 12 when the nacelle cover 18 is in the fully closed position as in Figure 5. The other movable cover panels 32 include two limiting walls 36 that extend in opposing directions from the end edges 38 of the respective movable cover panel 32. The outermost cover panel 30 engages with a second sealing member 44 provided on the nacelle housing 12.

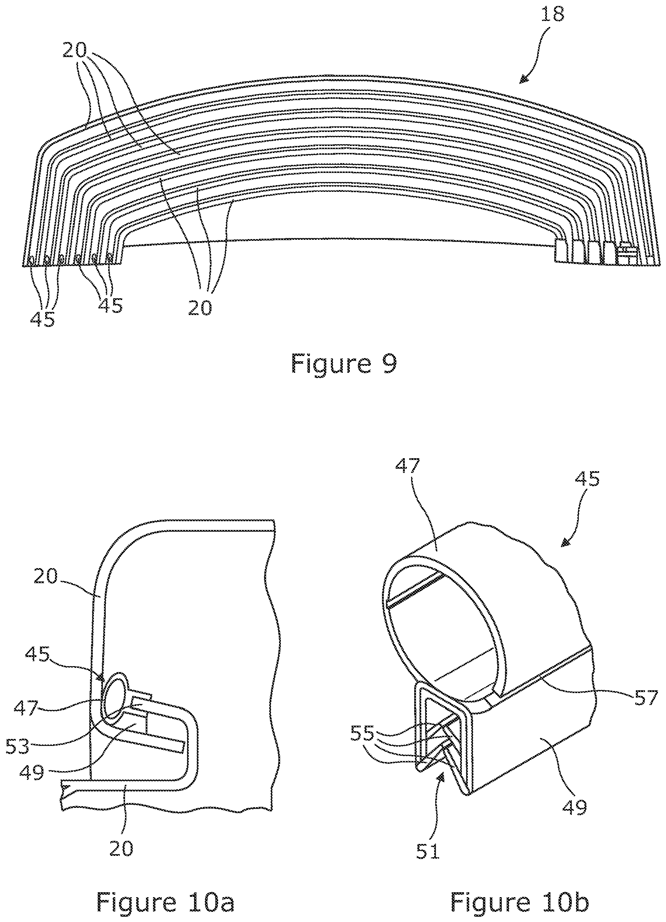

Referring to Figures 9 and 10, each cover panel 20 is also provided with a panel sealing member 45 that acts to seal the entire cross section between an associated cover panel 20 and a neighbouring cover panel 20.

Each panel sealing member 45 includes a sealing head 47 and an attachment portion 49. The attachment portion 49 defines an opening 51 for receiving an edge 53 of an associated cover panel 20, and includes flexible extensions 55 that extend into the opening 51 in an undeflected position. The flexible extensions 55 grip the edge 53 of the associated cover panel 20 when this edge 53 is received in the opening 51. The sealing head 47 has a generally circular cross-section and includes an opening 57 that allows the sealing head 47 to be more readily deformed in use, as shown in Figure 10a, to provide effective sealing between cover panels 20.

Referring now to Figure 3, to enable opening and closing of the nacelle cover 18, each movable cover panel 32 is provided with a rolling arrangement comprising first and second wheels, 46 and 48 respectively, that permit movement of the movable cover panel 32 with respect to the nacelle 10. The first and second wheels 46, 48 engage with respective first and second guide rails, 50 and 52, that extend along and parallel to side edges 54 of the nacelle opening 14 and a longitudinal axis 56 of the nacelle housing 12. Although not shown, it should be noted that drainage channels may extend from the side edges 54 of the nacelle opening 14 to outer side edges 59 of the nacelle housing 12. Such drainage channels allow water to drain from the upper surface 16 of the nacelle housing 12, and prevent water from collecting between the guide rails 50, 52.

Each first wheel 46 is rotatably attached to the first side wall 24 of its corresponding movable cover panel 32, and each second wheel 48 is rotatably attached to the second side wall 26 of its corresponding movable cover panel 32. The first and second wheels 46, 48 are provided generally centrally along the length of their respective side walls 24, 26.

In use, the first wheel 46 of each movable cover panel 32 engages a corresponding first guide rail 50 extending along a first side edge 58 of the nacelle opening 14, and the second wheel 48 of each cover panel engages a corresponding second guide rail 52 extending along a second side edge 60 of the nacelle opening 14. Thus, the nacelle 10 is provided with first and second rails 50, 52 for each movable cover panel, and includes six first rails 50 and six second rails 52 in total in this embodiment.

Figure 4 is a close-up view of the first wheel 46 of one of the movable cover panels 32, rotatably attached to the first side wall 24 of that movable cover panel 32, and engaged with its corresponding first rail 50 of the nacelle 10.

Each first rail 50 comprises a protrusion 62 that extends upwardly from the upper surface 16 of the nacelle housing 12 to form an upstanding shelf having a generally rectangular cross section. Each first rail 50 further comprises a plate 64 that sits on and is attached to the protrusion 62. In this embodiment the protrusion 62 is formed integrally with the nacelle housing 12 and the plate 64 is formed as a separate part that, in this example is formed of steel, but in other examples could be formed of other materials. In other embodiments the protrusion 62 may also be formed as a separate component from the nacelle housing 12.

As best appreciated from Figure 1, each first rail 50 extends in a direction parallel to the longitudinal axis 56 of the nacelle housing 12, along the first side edge 58 of the nacelle opening 14. As also best appreciated from Figure 1, the first rail 50 associated with the innermost cover panel 34 is positioned closest to the first side edge 58 of the nacelle opening 14, with the first rails 50 of the other movable cover panels 32 being provided outwardly of this.

Each first wheel 46 is generally cylindrical, comprising a generally cylindrical rail engaging surface 66 provided between two circumferential flanges 68 to define a generally H-shaped cross-section as shown in Figure 4. In use, the rail engaging surface 66 engages the plate 64 of the first rail 50, and the circumferential flanges 68 sit on either side of the plate 64 to maintain proper positioning of the first wheel on the first rail 50, and guard against disengagement of the first wheel 46 from the first rail 50.

The first wheel 50 further comprises an opening 70 having a generally circular cross section. The opening 70 defines a through-hole in the first wheel 50 and extends along a central axis 72 of the first wheel 72. The opening 70 includes a first portion 74 that defines a larger circular cross section, and a second portion 76 that defines a smaller circular cross section, as best understood with reference to Figure 4.

Each first wheel 46 is supported on a fixed axle or spindle 77. The spindle 77 extends along the central axis 72 of the first wheel 46 and defines a rotational axis 73 of the first wheel 46 that is coaxial with its central axis 72. In this example, the spindle 77 is defined by a bolt 78 comprising a body 80 and a head 82. The bolt 78 extends through bolt-receiving openings 84 of the first side wall 24 and a first plate 86, and into and partially through the opening 70 of the first wheel 46. Specifically, the bolt 78 is arranged such that its body 80 is received in the second portion 76 of the opening 70 of the first wheel 46, and its head 82 is received in the first portion 74 of the opening 70 of the first wheel 46. The bolt-receiving openings 84 of the first side wall 24 and the first plate 86 and the second portion 76 of the opening 70 of the first wheel 46 are each dimensioned so as to receive the body 80 of the bolt 78 in a loose fit. The first portion 74 of the opening 70 of the first wheel 46 is dimensioned so as to receive the head 82 of the bolt 78 in a loose fit. The bolt 78 is fixed with respect to the first side wall 24 of the movable cover panel 32 by means of a nut 88. With the bolt 78 arranged in this way, the first wheel 46 is able to rotate about the fixed spindle 77 and roll along the first rail 50 to drive movement of the movable cover panel 32 to which it is coupled.

The first plate 86 is provided between the first side wall 24 of the movable cover panel 32 and the first wheel 46 to guard against dirt or water entering the nacelle opening 14 via gaps between a lower edge 90 of the first side wall 24 and the upper surface 16 of the nacelle housing 12. For this, the first plate 86 is mounted to an outer surface 90 of the first side wall 24, and comprises a flange 92 that extends towards the first rail 50 and is positioned beneath the first wheel 46 in the assembled arrangement. Although not shown in Figure 4, the flanged first plate 86 may be attached to the first side wall 24 of the movable cover panel 32 by means of bolts or screws. Alternatively, the flanged first plate 86 may be attached to the first side wall 24 by means of glue or adhesive, or any other suitable attachment means.

It should be noted the arrangement between the first wheel 46, the first plate 86, the first rail 50 and the first side wall 24 that is as shown in Figure 4 is identical for each movable cover panel 32. Furthermore, the second wheel 48 and second rail 52 arrangement provided at the opposite, second side wall 26 of each movable cover panel 32 is generally the same as the arrangement shown in Figure 4, except that it is inverted when viewed from the same direction. As such, for conciseness, the second wheel and second rail arrangement will not be described.

The nacelle 10 further includes a control panel (not shown) that enables a user to input a command, for example to open, close or lock the nacelle cover 18, to a control system (not shown) of the nacelle 10.

When a user wishes to open or close the nacelle cover 18, the user simply inputs the appropriate command via the control panel. The command may be input simply by pressing a button in some embodiments, but other user interfaces are possible in other embodiments.

In response to the user input, the control system sends a control signal to activate the motor. Once activated, the motor drives rotation of the appropriate wheels 46, 48 of the movable cover panel(s) 32 in a rotational direction that is dependent on whether the user has requested opening or closing of the nacelle cover 18. Rotation of the wheels 46, 48 on their fixed spindles 77 causes the wheels 46, 48 to roll along their respective rails 50, 52, and the associated cover panel(s) 32 to move in a direction parallel to the longitudinal axis 56 of the nacelle 10.

A limit switch (not shown) is provided at each end of the nacelle opening 14. When the nacelle cover 18 reaches its fully open or its fully closed position, the respective limit switch is activated. Activation of the limit switch causes the motor to deactivate, which in turn prevents the nacelle cover 18 from attempting to move past its fully open or fully closed position.

In this example, when a user inputs a command to lock the nacelle cover 18, the control system prevents activation of the motor, thereby preventing movement of the movable cover panels 32. Thus, the nacelle cover 18 is effectively locked.

In some embodiments the nacelle cover 18 can only be locked when the nacelle cover 18 is in its fully closed position, so as to advantageously prevent the nacelle cover 18 from being locked at a position in which water, dirt and other elements that could damage components housed within the nacelle housing 12 could enter the nacelle housing 12. The status of the nacelle cover 18 as 'locked' may be indicated to a user via a light (not shown) provided on the control panel, and or at another position on the nacelle housing 12.

Many variations are possible within the inventive concept.

For example, the configuration and form of the wheels 46, 48 and rails 50, 52 of the nacelle 10 may differ in other embodiments.

Figure 6a shows an embodiment in which the rails 150 define inverted L-shaped cross-sections. As in the embodiment of Figure 1, the wheels 146 are supported on a fixed bolt 178 that acts as its rotational axis, and includes circumferential flanges 168 that maintain the wheels 146 in position on the rails 150 during use. A wind hook 169 in the form of an L-shaped bracket is mounted on each fixed bolt 178. A base 171 of each wind hook 169 extends beneath a roof 173 of the associated rail 150 to prevent the wheel 146 from disengaging from the rail 150, for example during strong winds. It will be appreciated that wind hooks 169 may be utilised in other embodiments of the invention.

Figure 6b illustrates a rail 250 of another embodiment. In this embodiment, the rails 250 are generally U-shaped in cross section, to each define a wheel-receiving space 252 between side walls 253 of the rail 250. In use, a wheel (not shown in Figure 6b) of a movable cover panel (also not shown in Figure 6b) is received in the wheel-receiving space 252. Flanges 254 provided at upper ends 256 of the side walls 253 project inwardly to guard against accidental removal of the wheel from the rail 250 in use. In another similar embodiment, the rail may be inverted to define an inverted U-shaped cross section in which the wheel sits in use.

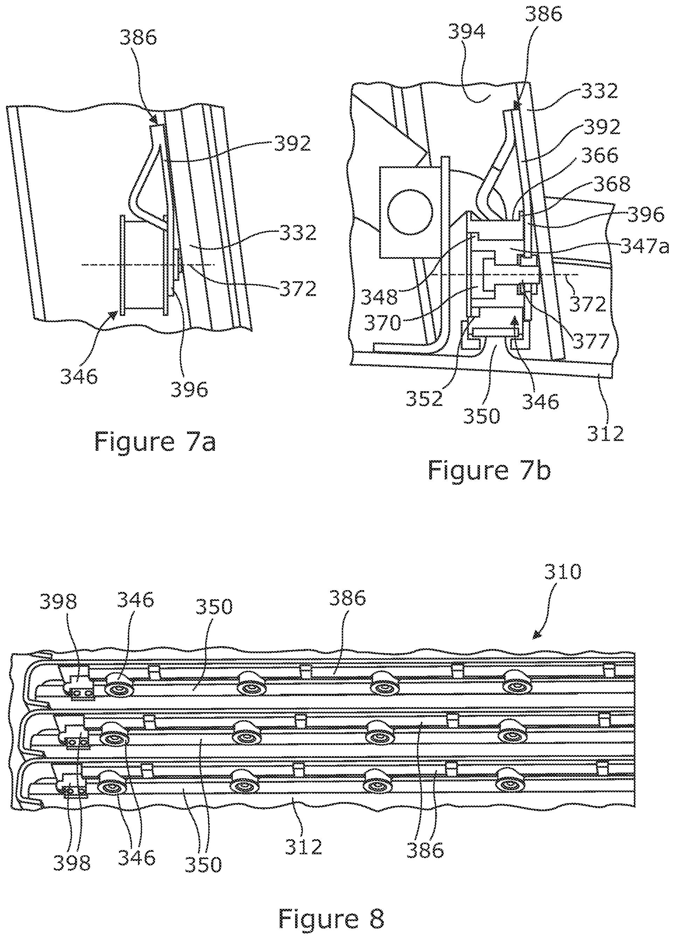

Figures 7a and 7b illustrate the configuration and arrangement of a first wheel 346 and first rail 350 of a nacelle 310 in accordance with another embodiment of the invention. The nacelle 310 of this embodiment has many features in common with the nacelle 10 of the embodiment of Figures 1 to 4, but differs in respect of the configuration and attachment of the rolling arrangement to its associated movable cover panel 332, as will now be explained.

In this embodiment, the first wheel 346 is coupled to its associated movable cover panel 332 via a first bracket 386. The first bracket 386 is shaped such that an upper portion 392 follows the curvature of an inner surface 394 of a first side wall 324 of the movable cover panel 332, and a lower portion 396 extends downwards, in a generally vertical direction, from the upper portion 392. In this way, the first bracket 386 is bent to ensure proper engagement of the first wheel 346 on the first rail 350 when mounted on the first side wall 324 of the movable cover panel 332, which slopes outwards in this embodiment.

Referring now to Figure 7b, the first wheel 346 comprises an inner body 347a and an outer body 347b.

The inner body 347a is generally cylindrical and includes a circumferential flange 348 that extends radially outwardly with respect to a central axis 372 of the first wheel 346, from the inner body 347a. An opening 370 penetrates the inner body 347a along the central axis 372 in a similar manner to the opening 70 of the embodiment of Figures 1 to 4.

The outer body 347b surrounds the inner body 347a, and the circumferential flange 348 of the inner body 347a engages with a circumferential recess 352 of the outer body 347b to retain the outer body 347b on the inner body 347a when the first wheel 346 is coupled to the first bracket 386 via fixed axle or spindle 377. Similarly to the embodiment of Figures 1 to 4, the outer body 347b defines a generally cylindrical rail engaging surface 366 provided between two circumferential flanges 368 to provide a generally H-shaped cross-section.

It should be noted that, as with the embodiment of Figures 1 to 4, the second wheel and second rail arrangements of this embodiment (neither of which are shown) are generally the same as the arrangement shown in Figure 7b, except that they are inverted when viewed from the same direction.

Another feature of this embodiment that will be appreciated from Figure 7b is that the portion of the nacelle housing 312 from which the first rail 350 protrudes extends at a shallow angle with respect to the horizontal. Specifically, this portion of the nacelle housing 312 slopes downwardly away from the nacelle opening (not shown in Figure 7b) to aid in drainage of water away from the nacelle opening and interior of the nacelle 310. This configuration may also be implemented in other embodiments.

Figure 8 illustrates end stops 398 that may be provided in any embodiment of the invention to limit movement of an associated movable cover panel 332. Each end stop 398 is mounted on an associated rail 350, and is positioned adjacent an end of the nacelle opening (also not shown in Figure 8). Although not shown in Figure 8, end stops 398 may be provided adjacent both ends of the nacelle opening. In this way, the end stops 398 limit movement of the movable cover panels 332 along the longitudinal axis of the nacelle 310, and prevent movement of the movable cover panels 332 past their fully open and/or fully closed positions.

As noted already, although the first embodiment of the nacelle cover 18 described above includes seven cover panels 20, in other embodiments this number may vary. For example, the nacelle cover 18 may include as few as two cover panels 20. Including fewer cover panels 20 is advantageous to reduce the complexity of the nacelle cover 18. However, including a greater number of cover panels 20 enables a greater proportion of the nacelle opening 14 to be accessible when the nacelle cover 18 is in the fully open position.

It should also be understood that although the movable cover panels 32 of the embodiments described each include one pair of wheels 46, 48, in other embodiments each movable cover panel 32 could include additional first and/or second wheels 46, 48. Furthermore, although in the embodiment of Figure 1 the outermost cover panel 30 defines the fixed cover panel, in other embodiments not covered by the claims the innermost cover panel 34 may define the fixed cover panel.

Although movement of the nacelle cover 18 is achieved via electronic means in the embodiment of Figure 1, it would of course also be possible to manually open and/or close the nacelle cover 18 in embodiments of the invention.

### Reference Numbers:

nacelle 10
nacelle housing 12
nacelle opening 14
upper surface of nacelle housing 16
nacelle cover 18
cover panels 20
upper wall 22
first side wall 24
second side wall 26
side edges of upper wall 28
outermost cover panel 30
movable cover panels 32
innermost cover panel 34
limiting wall 36
end edge 38
inner surface of innermost cover panel 40
first sealing member 42
second sealing member 44
panel sealing member 45
first wheel 46
sealing head 47
second wheel 48
attachment portion 49
first rail 50
attachment portion opening 51
second rail 52
cover panel edge 53
side edges of nacelle opening 54
extensions 55
longitudinal axis 56
sealing head opening 57first side edge of nacelle opening 58
outer side edges of the nacelle 59
second side edge of nacelle opening 60
protrusion 62
plate 64
rail engaging surface of wheel 66
flanges of wheel 68
first wheel opening 70
central axis of first wheel 72
first portion of first wheel opening 74
second portion of first wheel opening 76
bolt 78
body of bolt 80
head of bolt 82
bolt-receiving openings 84
first plate 86
nut 88
outer surface 90wheels 146
rail 150
flange 168
wind hook 169
base of wind hook 171
roof of rail 173
bolt 178
rail 250
wheel-receiving space 252
side walls 253
flange 254
upper ends of side walls 256
nacelle housing 312
first side wall 324
movable cover panel 332
first wheel 346
inner body 347a
outer body 347b
circumferential flange 348
first rail 350
circumferential recess 352
rail engaging surface 366
circumferential flanges 368
opening 370
central axis 372
fixed axle or spindle 377
first bracket 386
upper portion of first bracket 392
inner surface of first side wall 394
lower portion of first bracket 396
end stops 398

## Claims

1. A nacelle (10) for a wind turbine, the nacelle (10) comprising:
a nacelle housing (12) for housing components of a wind turbine, the nacelle housing (12) comprising a nacelle opening (14); and
a nacelle cover (18) arranged over the nacelle opening (14), the nacelle cover (18) being movable between a closed position in which the nacelle opening (14) is fully covered by the nacelle cover (18), and an open position in which the nacelle opening (14) is at least partially uncovered to allow access to components housed within the nacelle housing (12);
wherein the nacelle cover (18) comprises multiple cover panels (20, 30, 32) arranged telescopically with respect to one another, wherein at least one cover panel (20, 32) is movable with respect to another cover panel (20, 30, 32) along a longitudinal axis (56) of the nacelle (10) to move the nacelle cover (18) between its open and closed positions;
**characterized in that** the nacelle cover (18) comprises a fixed cover panel (30) positioned at an end of the opening (14), and **in that**, when the nacelle cover (18) is in a fully open position, the at least one movable cover panel (32) is nested within the fixed cover panel (30).

2. A nacelle (10) as claimed in Claim 1, wherein each movable cover panel (32) comprises a rolling arrangement that permits movement of the movable cover panel (32) with respect to the nacelle (10).

3. A nacelle (10) as claimed in Claim 2, wherein the rolling arrangement comprises at least two wheels (46, 48), wherein a first wheel (46) is rotatably mounted to a first side wall (24) of the movable cover panel (32), and a second wheel (48) is rotatably mounted to a second, opposing, side wall (26) of the movable cover panel (32).

4. A nacelle (10) as claimed in Claim 3, comprising at least two rails (50, 52), wherein the first wheel (46) engages and is rotatable along a first rail (50) that extends longitudinally along a first side edge (58) of the nacelle opening (14), and wherein the second wheel (48) engages and is rotatable along a second rail (52) that extends longitudinally along a second side edge (60) of the nacelle opening (14).

5. A nacelle (10) as claimed in Claim 4, wherein each rail (50, 52) extends outwardly from the nacelle housing (12) to define a generally T-shaped cross section.

6. A nacelle (10) as claimed in Claim 5, wherein each wheel (46, 48) comprises two circumferential flanges (68) arranged at either side of its corresponding rail (50, 52) so as to maintain positioning of the wheel (46, 48) on the rail (50, 52) in use.

7. A nacelle (10) as claimed in any of Claims 3 to 6, wherein each wheel (46, 48) is mounted to the movable cover panel (32) via a bracket (386) comprising an upper portion (392) and a lower portion (396), wherein:
the upper portion (392) is attached to and follows the curvature of the side wall (24, 26) of the movable cover panel (32); and
the lower portion (396) extends downwardly from the upper portion (392) in a generally vertical plane, and supports the wheel (46, 48) for rotation about an axis that extends generally perpendicularly to the generally vertical plane.

8. A nacelle (10) as claimed in Claim 4, wherein each rail (50, 52) extends outwardly from the nacelle housing (12) and defines a generally U-shaped cross section.

9. A nacelle (10) as claimed in any preceding claim, further comprising a motor configured to drive opening and closing of the nacelle cover (18).

10. A nacelle (10) as claimed in Claim 9, wherein the motor is configured to drive movement of each movable cover panel (32) independently from one another.

11. A nacelle (10) as claimed in any preceding claim, comprising a control system configured to carry out instructions received by a control panel of the nacelle (10).

12. A nacelle (10) as claimed in Claim 11, wherein the instructions include at least one of: a request to open the nacelle cover (18), a request to close the nacelle cover (18), or a request to lock the nacelle cover (18).

13. A nacelle (10) as claimed in Claim 12, wherein when the nacelle cover (18) is locked, the control system prevents activation of the motor to prevent movement of the nacelle cover (18).

## Patentansprüche

1. Gondel (10) für eine Windkraftanlage, wobei die Gondel (10) Folgendes umfasst:
ein Gondelgehäuse (12) zum Unterbringen von Komponenten einer Windkraftanlage, wobei das Gondelgehäuse (12) eine Gondelöffnung (14) umfasst; und
eine Gondelabdeckung (18), die über der Gondelöffnung (14) angeordnet ist, wobei die Gondelabdeckung (18) zwischen einer geschlossenen Position, in der die Gondelöffnung (14) vollständig von der Gondelabdeckung (18) bedeckt ist, und einer offenen Position, in der die Gondelöffnung (14) zumindest teilweise freigelegt ist, um Zugang zu den im Gondelgehäuse (12) untergebrachten Komponenten zu ermöglichen, beweglich ist;
wobei die Gondelabdeckung (18) mehrere teleskopartig in Bezug auf einander angeordnete Abdeckplatten (20, 30, 32) umfasst, wobei mindestens eine Abdeckplatte (20, 32) in Bezug auf eine andere Abdeckplatte (20, 30, 32) entlang einer Längsachse (56) der Gondel (10) beweglich ist, um die Gondelabdeckung (18) zwischen ihrer offenen und geschlossenen Position zu bewegen;
**dadurch gekennzeichnet, dass** die Gondelabdeckung (18) eine feste Abdeckplatte (30) umfasst, die an einem Ende der Öffnung (14) angeordnet ist, und dadurch, dass, wenn sich die Gondelabdeckung (18) in einer vollständig geöffneten Position befindet, die mindestens eine bewegliche Abdeckplatte (32) in der festen Abdeckplatte (30) verschachtelt ist.

2. Gondel (10) nach Anspruch 1, wobei jede bewegliche Abdeckplatte (32) eine Rollanordnung umfasst, die eine Bewegung der beweglichen Abdeckplatte (32) in Bezug auf die Gondel (10) zulässt.

3. Gondel (10) nach Anspruch 2, wobei die Rollanordnung mindestens zwei Räder (46, 48) umfasst, wobei ein erstes Rad (46) drehbar an einer ersten Seitenwand (24) der beweglichen Abdeckplatte (32) befestigt ist und ein zweites Rad (48) drehbar an einer zweiten, gegenüberliegenden Seitenwand (26) der beweglichen Abdeckplatte (32) befestigt ist.

4. Gondel (10) nach Anspruch 3, umfassend mindestens zwei Schienen (50, 52), wobei das erste Rad (46) in eine erste Schiene (50), die sich in Längsrichtung entlang einer ersten Seitenkante (58) der Gondelöffnung (14) erstreckt, eingreift und entlang dieser drehbar ist, und wobei das zweite Rad (48) in eine zweite Schiene (52), die sich in Längsrichtung entlang einer zweiten Seitenkante (60) der Gondelöffnung (14) erstreckt, eingreift und entlang dieser drehbar ist.

5. Gondel (10) nach Anspruch 4, wobei sich jede Schiene (50, 52) vom Gondelgehäuse (12) nach außen erstreckt, um einen im Allgemeinen T-förmigen Querschnitt zu definieren.

6. Gondel (10) nach Anspruch 5, wobei jedes Rad (46, 48) zwei umlaufende Flansche (68) umfasst, die auf beiden Seiten der entsprechenden Schiene (50, 52) angeordnet sind, um in Verwendung Positionierung des Rades (46, 48) auf der Schiene (50, 52) aufrechtzuerhalten.

7. Gondel (10) nach einem der Ansprüche 3 bis 6, wobei jedes Rad (46, 48) über eine Halterung (386), die einen oberen Abschnitt (392) und einen unteren Abschnitt (396) umfasst, an der beweglichen Abdeckplatte (32) befestigt ist, wobei:
der obere Abschnitt (392) an der Seitenwand (24, 26) der beweglichen Abdeckplatte (32) befestigt ist und deren Krümmung folgt; und
sich der untere Abschnitt (396) vom oberen Abschnitt (392) in einer im Allgemeinen vertikalen Ebene nach unten erstreckt und das Rad (46, 48) zur Drehung um eine Achse, die sich im Allgemeinen senkrecht zur im Allgemeinen vertikalen Ebene erstreckt, trägt.

8. Gondel (10) nach Anspruch 4, wobei sich jede Schiene (50, 52) vom Gondelgehäuse (12) nach außen erstreckt und einen im Allgemeinen U-förmigen Querschnitt definiert.

9. Gondel (10) nach einem vorstehenden Anspruch, weiter umfassend einen Motor, der so konfiguriert ist, dass er die Gondelabdeckung (18) öffnet und schließt.

10. Gondel (10) nach Anspruch 9, wobei der Motor so konfiguriert ist, dass er Bewegung von jeder beweglichen Abdeckplatte (32) unabhängig voneinander antreibt.

11. Gondel (10) nach einem vorstehenden Anspruch, umfassend ein Steuersystem, das so konfiguriert ist, dass es Anweisungen ausführt, die von einem Bedienfeld der Gondel (10) empfangen werden.

12. Gondel (10) nach Anspruch 11, wobei die Anweisungen mindestens eines enthalten von: einer Aufforderung, die Gondelabdeckung (18) zu öffnen, einer Aufforderung, die Gondelabdeckung (18) zu schließen, oder einer Aufforderung, die Gondelabdeckung (18) zu verriegeln.

13. Gondel (10) nach Anspruch 12, wobei, wenn die Gondelabdeckung (18) verriegelt ist, das Steuersystem Aktivierung des Motors verhindert, um Bewegung der Gondelabdeckung (18) zu verhindern.

## Revendications

1. Nacelle (10) pour une éolienne, la nacelle (10) comprenant :
un boîtier de nacelle (12) destiné à loger les composants d'une éolienne, le boîtier de nacelle (12) comprenant une ouverture de nacelle (14) ; et
un couvercle de nacelle (18) disposé sur l'ouverture de nacelle (14), le couvercle de nacelle (18) étant mobile entre une position fermée dans laquelle l'ouverture de nacelle (14) est entièrement recouverte par le couvercle de nacelle (18) et une position ouverte dans laquelle l'ouverture de nacelle (14) est au moins partiellement découverte pour permettre un accès à des composants logés dans le boîtier de nacelle (12) ;
dans laquelle le couvercle de nacelle (18) comprend de multiples panneaux de couverture (20, 30, 32) disposés télescopiquement les uns par rapport aux autres, dans laquelle au moins un panneau de couverture (20, 32) est mobile par rapport à un autre panneau de couverture (20, 30, 32) le long d'un axe longitudinal (56) de la nacelle (10) pour déplacer le couvercle de nacelle (18) entre ses positions ouverte et fermée ;
**caractérisée en ce que** le couvercle de nacelle (18) comprend un panneau de couvercle fixe (30) positionné au niveau d'une extrémité de l'ouverture (14) et **en ce que**, lorsque le couvercle de nacelle (18) est en position complètement ouverte, l'au moins un panneau de couvercle mobile (32) est imbriqué dans le panneau de couvercle fixe (30).

2. Nacelle (10) selon la revendication 1, dans laquelle chaque panneau de couvercle mobile (32) comprend un agencement de roulement qui permet un mouvement du panneau de couvercle mobile (32) par rapport à la nacelle (10).

3. Nacelle (10) selon la revendication 2, dans laquelle l'agencement de roulement comprend au moins deux roues (46, 48), dans laquelle une première roue (46) est montée de manière rotative sur une première paroi latérale (24) du panneau de couvercle mobile (32) et une seconde roue (48) est montée de manière rotative sur une seconde paroi latérale opposée (26) du panneau de couvercle mobile (32).

4. Nacelle (10) selon la revendication 3, comprenant au moins deux rails (50, 52), dans laquelle la première roue (46) s'engage et peut tourner le long d'un premier rail (50) qui s'étend longitudinalement le long d'un premier bord latéral (58) de l'ouverture de nacelle (14) et dans laquelle la seconde roue (48) s'engage et peut tourner le long d'un second rail (52) qui s'étend longitudinalement le long d'un second bord latéral (60) de l'ouverture de nacelle (14).

5. Nacelle (10) selon la revendication 4, dans laquelle chaque rail (50, 52) s'étend vers l'extérieur à partir du boîtier de nacelle (12) pour définir une section transversale globalement en forme de T.

6. Nacelle (10) selon la revendication 5, dans laquelle chaque roue (46, 48) comprend deux brides circonférentielles (68) disposées de chaque côté de son rail correspondant (50, 52) de manière à maintenir un positionnement de la roue (46, 48) sur le rail (50, 52) en cours d'utilisation.

7. Nacelle (10) selon l'une quelconque des revendications 3 à 6, dans laquelle chaque roue (46, 48) est montée sur le panneau de couvercle mobile (32) par l'intermédiaire d'un support (386) comprenant une partie supérieure (392) et une partie inférieure (396), dans laquelle :
la partie supérieure (392) est fixée à la paroi latérale (24, 26) du panneau de couvercle mobile (32) et en épouse la courbure ; et
la partie inférieure (396) s'étend vers le bas à partir de la partie supérieure (392) dans un plan globalement vertical et supporte la roue (46, 48) pour la rotation autour d'un axe qui s'étend globalement perpendiculairement au plan globalement vertical.

8. Nacelle (10) selon la revendication 4, dans laquelle chaque rail (50, 52) s'étend vers l'extérieur à partir du boîtier de nacelle (12) et définit une section transversale globalement en forme de U.

9. Nacelle (10) selon une quelconque revendication précédente, comprenant en outre un moteur configuré pour entraîner une ouverture et une fermeture du couvercle de nacelle (18).

10. Nacelle (10) selon la revendication 9, dans laquelle le moteur est configuré pour entraîner un mouvement de chaque panneau de couvercle mobile (32) indépendamment l'un de l'autre.

11. Nacelle (10) selon une quelconque revendication précédente, comprenant un système de commande configuré pour exécuter des instructions reçues par un panneau de commande de la nacelle (10).

12. Nacelle (10) selon la revendication 11, dans laquelle les instructions incluent au moins une parmi : une demande d'ouverture du couvercle de nacelle (18), une demande de fermeture du couvercle de nacelle (18) ou une demande de verrouillage du couvercle de nacelle (18).

13. Nacelle (10) selon la revendication 12, dans laquelle, lorsque le couvercle de nacelle (18) est verrouillé, le système de commande empêche une activation du moteur pour empêcher un mouvement du couvercle de nacelle (18).
